(19) Europäisches Patentamt

European Patent Office

Office européen des brevets

(11) **EP 1 649 163 B1**

(12) **EUROPEAN PATENT SPECIFICATION**

(45) Date of publication and mention
of the grant of the patent:
**01.05.2013 Bulletin 2013/18**

(51) Int Cl.:
*F03D 3/00* <sup>(2006.01)</sup>     *F03D 3/06* <sup>(2006.01)</sup>

(21) Application number: **04743584.7**

(22) Date of filing: **26.07.2004**

(86) International application number:
**PCT/GB2004/003257**

(87) International publication number:
**WO 2005/010355 (03.02.2005 Gazette 2005/05)**

(54) **VERTICAL-AXIS WIND TURBINE**

WINDTURBINE MIT SENKRECHTER DREHACHSE

EOLIENNE D'AXE VERTICAL

(84) Designated Contracting States:
**AT BE BG CH CY CZ DE DK EE ES FI FR GB GR
HU IE IT LI LU MC NL PL PT RO SE SI SK TR**

(30) Priority: **24.07.2003  GB 0317337**

(43) Date of publication of application:
**26.04.2006  Bulletin 2006/17**

(73) Proprietor: **Quiet Revolution Limited
Blythe Road
London
W14 0HN (GB)**

(72) Inventor: **COCHRANE, Richard
Barbican,
London EC2Y 8AT (GB)**

(74) Representative: **Thomson, Neil David et al
Boult Wade Tennant
Verulam Gardens
70 Gray's Inn Road
London WC1X 8BT (GB)**

(56) References cited:
**DE-A- 3 825 241      DE-A- 4 005 685
DE-A- 4 006 256      US-A- 5 405 246
US-A1- 2001 001 299**

**Description**

This invention relates to vertical-axis wind turbines (VAWTs) used in general, but not exclusively, for electricity generation.

VAWTs have been known for many years. An early example is shown in U.S. 1,835,018 in the name of Darrieus, wherein a turbine is provided having three blades rotating about a shaft which is arranged transverse to the flow of the driving wind. Each blade has a section in the form of an aerofoil which produces dynamic lift when air is passed over the upper and lower aerofoil surfaces.

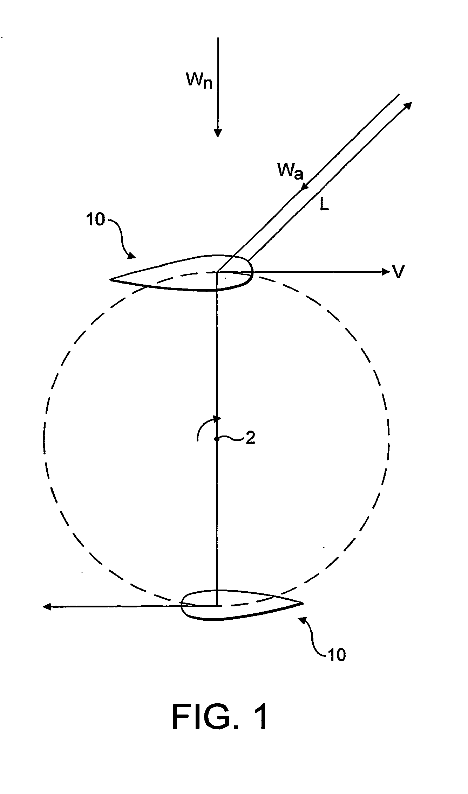

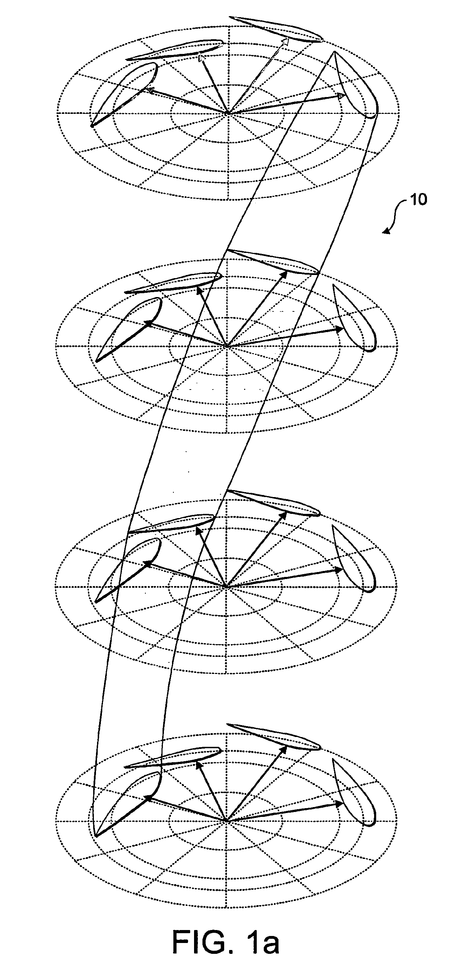

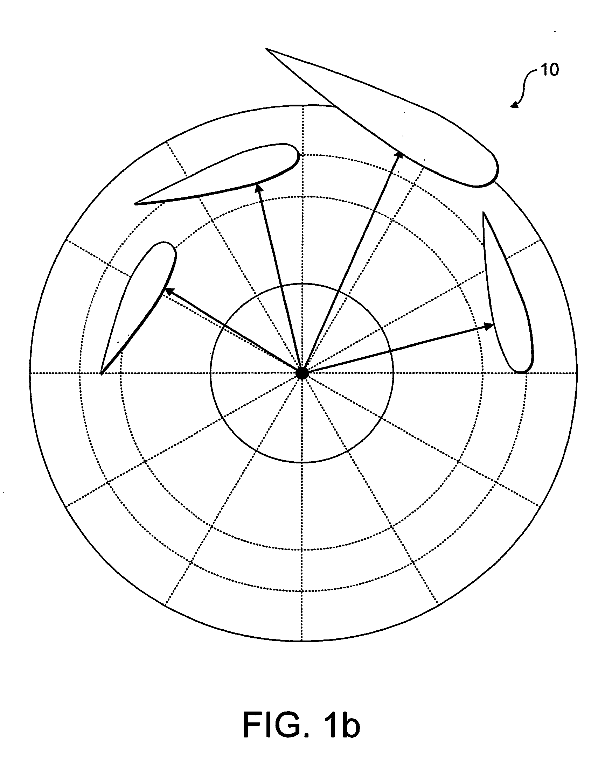

A schematic illustration of how a two-bladed VAWT works is shown in Figure 1. Each blade 10 is configured as an aerofoil which is aligned tangentially to its local radius of rotation about a shaft 2. The nominal wind velocity is shown by arrow $W_n$ and the instantaneous velocity of the upper blade 10 is shown by arrow v. In the position shown in Figure 1 the blades 10 are moving across the wind such that the apparent wind velocity experienced by the blade is in a direction and of a magnitude as shown by arrow $W_a$. Lift produced by the aerofoil-sectioned blade is perpendicular to the apparent wind direction $W_a$ and thus acts in the direction of arrow 1. The component of force 1 acting perpendicularly to the radius of rotation of the blade acts to rotate the blade 10 about shaft 2. The generated lift acts to rotate the shaft so that the blades 10 move alternatively from positions where they actively produce lift as they cross the wind $W_n$ to positions where they 'coast' as the blades are aligned with the wind direction $W_n$. The rotation of the shaft 2 can be used for the generation of electricity in a known manner. VAWTs have an advantage over horizontal-axis wind turbines in that they do not need to be orientated into the prevailing wind direction but are able to produce a rotational movement irrespective of the wind direction. However, VAWTs have been found to have certain technical problems.

VAWTs are prone to a number of problems. Firstly, very high stresses can be developed in the blades due to the centrifugal forces produced on rotation of the turbine at high rotational speeds. Secondly, the cutting of the blades through the air at high rotational speeds can lead to unacceptable noise levels produced by large vortices being shed at the blade tips. Thirdly, VAWTs can produce uneven torque from their lifting surfaces as the blades alternate between crossing the wind direction and 'coasting'.

U.S. 5,405,246, in the name of Goldberg, describes a vertical-axis wind turbine which includes two or more elongated blades connected to a rotor tower. Each blade is "twisted" so that its lower attachment point is displaced angularly relative to its upper attachment point. The orientation of each blade is tangential to the local radius as shown in Figures 1a and 1b. The blade section length of each blade is disclosed as being shorter near the midpoint of each blade and longer near the ends of each blade. The ratio between the blade section length and the blade thickness is disclosed as being constant over the length of each blade. The twisting of the blades helps somewhat to even out the torque produced by the turbine during its revolution since a portion of at least one blade is crossing the wind direction at all times and thus the overall turbine is never completely in a 'coasting' state. However, it has been found that the design of turbine described in U.S. 5,405,246 can be improved upon as described below in relation to the present invention, particularly when applied to relatively compact turbines as may be desirable in urban environments.

US2001/0001299 in the name of Gorlov describes a VAWT having arcuately shaped aerofoil sections where the outermost surfaces of the blades are generally orientated to lie along a circle such that the chord (being a line joining the leading and trailing edges of the aerofoil) of each blade forms the chord of an arc of a circle. It has been found that the design described in US2001/0001299 can be improved upon as described below in relation to the present invention, particularly when applied to relatively compact turbines as may be desirable in urban environments.

It is an object of the present invention to produce a VAWT which addresses at least some of the problems described above to produce a more efficient and acceptable design and performance compared to known VAWTs.

The present invention provides a vertical-axis wind turbine comprising a shaft rotatable about a longitudinal axis and a plurality of substantially rigid blades mechanically coupled to the shaft, each of the plurality of blades comprising an elongate body having an upper end and a lower end, wherein the upper end and the lower end of each blade are rotationally off-set from each other about the longitudinal axis such that each blade has a helix-like form, the section of the elongate body of each blade, taken perpendicularly to the longitudinal axis, being shaped as an aerofoil having a leading edge and a trailing edge and a camber line defined between the leading edge and the trailing edge, characterised in that the aerofoil is arcuately shaped such that the camber line lies along a line of constant curvature having a finite radius of curvature, R'.

Preferably, the radial distance R of the camber line of each blade from the longitudinal axis varies along the length of the blade.

In one embodiment, the radius of curvature R' of the camber line varies along the length of each blade.

Preferably, R' is greater than or equal to 1.00R and less than or equal to 1.12R.

R' may be approximately equal to 1.03R. Alternatively, R' may equal R.

In one embodiment the blade shape approximates a troposkein.

Preferably the chord length of each blade varies along the length of the blade. In one embodiment the chord length of each blade is shorter towards the upper and/or lower ends relative to a central portion of each blade.

Preferably, the turbine further comprises a plurality of struts mechanically coupling the blades to the shaft. In one embodiment each blade is joined to the shaft by means of an upper strut and a lower strut. The elongate body of each blade may comprise a central portion extending between the blade's upper and lower struts, an upper portion extending above the blade's upper strut and a lower portion extending below the blade's lower strut. The upper portion of each blade may define the upper end, wherein the upper end is free-standing. The lower portion of each blade may define the lower end, wherein the lower end is free-standing. Optionally, the radial distance of the upper end and the lower end of each blade from the longitudinal axis is less than the length of the struts. In another embodiment the upper strut is joined to the upper end of each blade and the lower strut is joined to the lower end of each blade.

Preferably, the thickness-to-chord ratio of each blade is greater at or near a junction with the struts compared to the thickness-to-chord ratio of the central portion.

In one embodiment the thickness-to-chord ratio of each blade increases towards the upper and/or lower ends of the elongate body compared to the thickness-to-chord ratio of the central portion. In another embodiment the thickness-to-chord ratio of each blade is constant along the elongate body.

Preferably, the turbine comprises three blades equi-spaced about the longitudinal axis.

In one embodiment the turbine further comprises at least one strut between each blade and the rotatable shaft, wherein the strut is formed as a unitary member with the blade.

In another embodiment the turbine further comprises at least one disc-like member spanning between each blade and the rotatable shaft. Preferably, the at least on disc-like member is located at an extremity of the blades.

Optionally, each blade comprises a foam core and a composite skin.

The present invention further provides a vertical-axis wind turbine comprising a shaft rotatable about a longitudinal axis and a plurality of substantially rigid blades mechanically coupled to the shaft, each of the plurality of blades comprising an elongate body having an upper end and a lower end, wherein the upper end and the lower end of each blade are rotationally off-set from each other about the longitudinal axis such that each blade has a helix-like form, the section of the elongate body of each blade, taken perpendicularly to the longitudinal axis, being shaped as an aerofoil having a leading edge and a trailing edge and a chord line defined between the leading edge and the trailing edge, characterised in that the length of the chord line of each blade decreases towards the upper and/or lower ends relative to a central portion of each blade.

Preferably, the length of the chord line of each blade decreases towards at least a downwind end of each blade.

Embodiments of the present invention will now be described, by way of example only, with reference to the accompanying drawings in which:-

Figure 1 is a schematic illustration, in plan view, of a rotating VAWT;
Figure 1a is a schematic perspective view of a blade of a VAWT according to the prior art as described in U.S. 5,405,246;
Figure 1b is a schematic cross-sectional view of the blade of Figure 1a showing its cross-section at four levels;
Figure 2 is perspective view of a VAWT according to the present invention;
Figure 3a is a schematic perspective view of a portion of a blade of the VAWT of Figure 2;
Figure 3b is a schematic cross-sectional view of the blade of Figure 3a showing its cross-section at four levels;
Figure 4 is a cross-sectional view through the portion of the blade shown in Figure 3a; and
Figure 5 is a schematic illustration, in plan view of a blade of another VAWT according to the present invention.

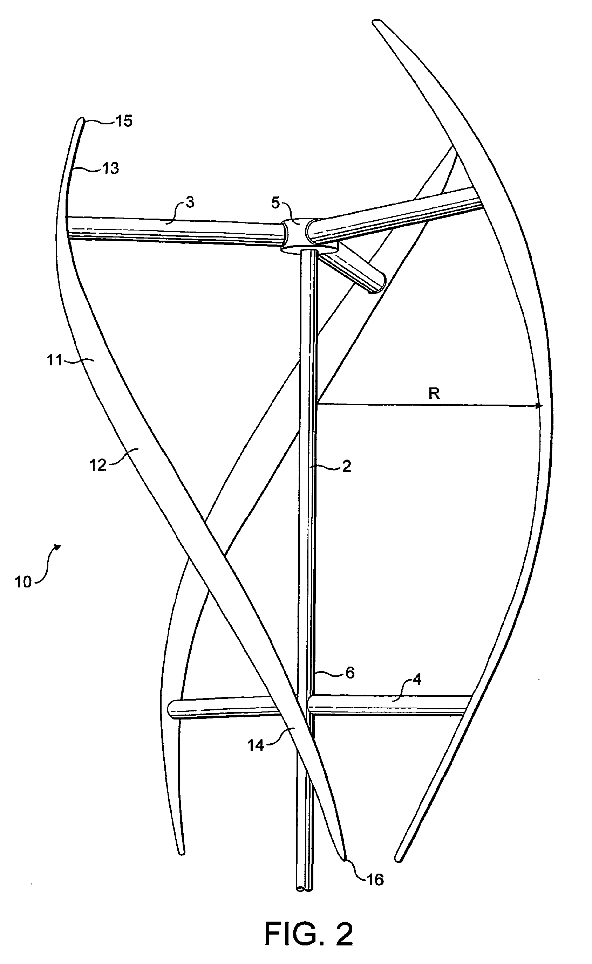

With reference initially to Figure 2, the present invention provides a VAWT 1 having a rotatable shaft 2 aligned substantially along a longitudinal axis 7. Three blades 10 are mechanically coupled to the rotatable shaft 2 by means of struts 3, 4. Each blade 10 is attached to the rotatable shaft 2 by means of an upper strut 3 which joins to an upper hub 5 on the rotatable shaft 2 and a lower strut 4 which joins to a lower hub 6 on the rotatable shaft 2. The struts 3, 4 are substantially horizontal and perpendicular to the longitudinal axis 7.

Each blade 10 comprises an elongate body 11 which is twisted about the longitudinal axis 7 into a helix-like form. In consequence, the upper strut 3 of each blade 10 is rotationally off-set about the rotatable shaft 2 relative to the lower strut 4 as shown in Figure 2. The helix-like form of the blades 10 ensures that the torque profile of the turbine 1 is smoothed out since a portion of at least one of the three blades 10 is always crossing the ambient wind $W_a$. The smoothed torque profile also reduces cyclic loading on the turbine components since the turbine is less prone to torque peaks. This reduces the fatigue loading on the components. The design also allows the turbine 1 to exhibit increased performance characteristics at low wind speeds. This makes the turbine 1 of the present invention particularly suitable for placement in urban environments where air flow speeds may be reduced and/or made more turbulent by the presence of buildings and other man-made structures.

The elongate body 11 of each blade 10 comprises a central portion 12 which extends between the upper and lower struts 3, 4, an upper portion 13 which extends above the upper strut 3 and a lower portion 14 which extends below the lower strut 4. The upper portion 13 extends upwardly to an upper tip 15 which is free-standing. The lower portion 14 extends downwardly to a lower tip 16 which is also free-standing.

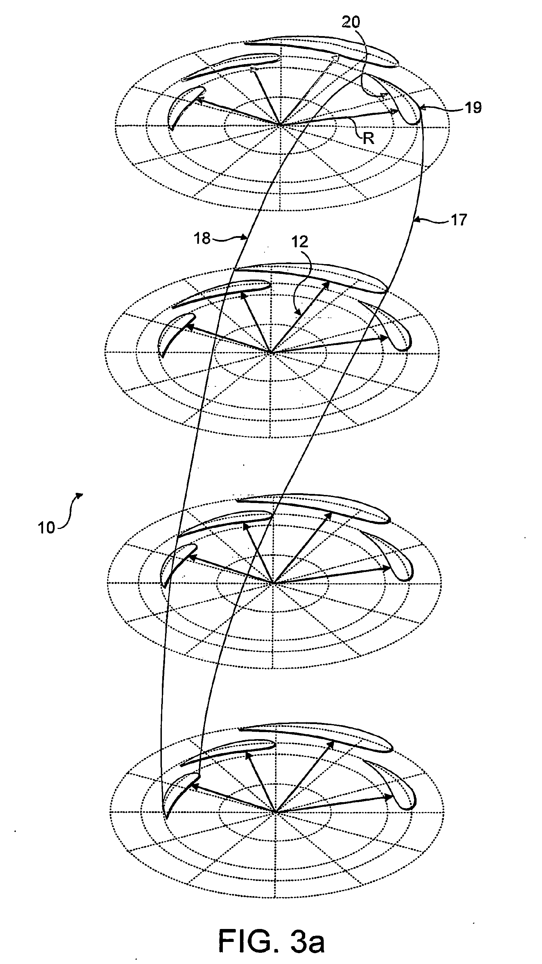

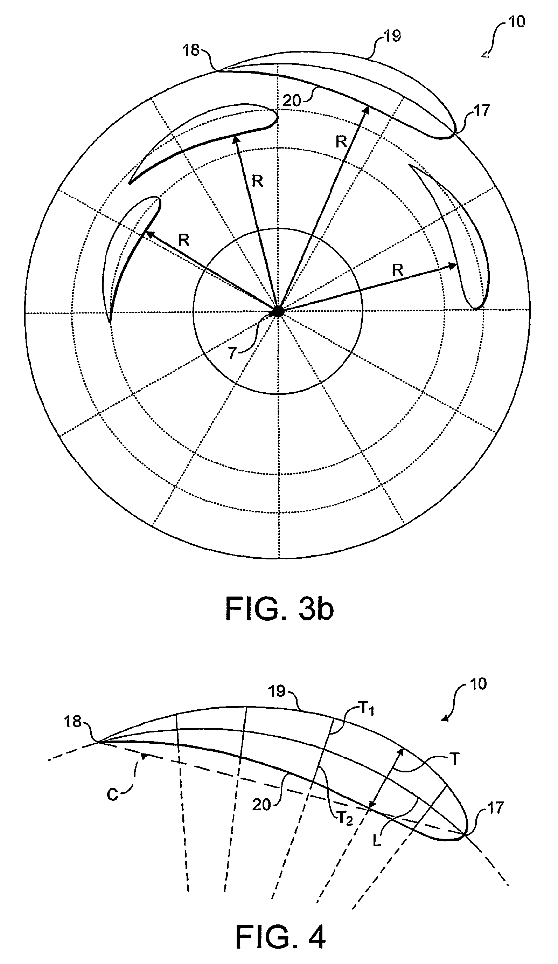

The radial distance, R, of the elongate body 11 of each blade 10 from the longitudinal axis 7 varies along the length of the blade 10 as shown in Figure 2 and schematically in Figures 3a and 3b. Preferably, the blades 10 are shaped in a form of a troposkein. A troposkein is that shape adopted by a flexible member held at either end and spun about an axis passing through either end. As can be seen, the radial distance R of the central portion 12 is greater than that of the upper or lower portion 13, 14. Forming the blade 10 in a troposkein shape ensures that bending movements in the blade due to the centrifugal forces are kept to a minimum.

As shown in Figure 2, the upper end 15 and lower end 16 of the blade 10 are closer to the longitudinal axis 7 than the blade 10 at the junctions with the upper strut 3 and lower strut 4.

The attachment of the struts 3, 4 part way along the elongate body 11 of each blade 10 is advantageous in that the struts provide more even support to the blade 10. In particular, the maximum span between the struts 3, 4 is reduced compared to struts provided at the extremities of the blade 10 and thus the bending stresses in the elongate body 11 are reduced. However, the struts may, if desired be positioned at the extremities of the elongate body 11.

The blade section is shaped as an aerofoil as most clearly shown in Figures 3b and 4. The aerofoil section comprises a leading edge 17 and a trailing edge 18. The section also comprises an upper aerofoil surface 19 which is that surface of the blade 10 furthest from the rotatable shaft 2 and a lower aerofoil surface 20 which is that surface of the blade 10 closest to the rotatable shaft 2.

A chord, C, is definable between the leading edge 17 and the trailing edge 18 of the aerofoil section. The chord, C, is a straight line. A curved camber line L is also definable between the leading edge 17 and trailing edge 18 of the aerofoil section. As shown most clearly in Figures 3b and 4, the aerofoil section of the blade 10 of the present invention is shaped such that the camber line L between the leading edge 17 and the trailing edge 18 is not straight but arcuate such as to have a constant curvature having a finite radius of curvature. In other words, the aerofoil section of each blade 10 is 'wrapped' around a centre of curvature. Consequently, the camber line L does not lie on the chord of the aerofoil section. In the embodiment of VAWT shown in Figures 2 to 4 the centre of curvature coincides with the longitudinal axis of rotation 7 of the VAWT. In other words, the camber line is curved to follow the circumferential line along which the airfoil is travelling as it rotates about axis 7. As a result, the blade's rotation into the wind will be minimised. This wrapping of the airfoil section is advantageous, especially for turbines where the camber line length L is large relative to the radius of the VAWT, a design characteristic important for small turbines where the viscous aerodynamic effects may limit the use of short camber line length airfoils.

In addition, the aerofoil section is symmetrical about the camber line L. That is, along the entire aerofoil section, the distance, taken perpendicularly to the camber line (that is radially from axis 7), between the camber line L and the upper aerofoil surface 19 (shown in Figure 4 as $T_1$) is the same as the distance between the camber line L and the lower aerofoil surface 20 (shown in Figure 4 as $T_2$). This combination of the symmetry and wrapping of the aerofoil section increases the efficiency of lift production of the VAWT compared to prior designs. This is achieved because the aerofoil section produces lift for a longer period as it rotates about shaft 2 since as the blade section crosses the wind it appears to the wind to be symmetrical along its entire camber line thus optimising the net driving force available to rotate the VAWT. In comparison, using tangentially symmetrical blades as described in U.S. 5,405,246 is less efficient since the blade appears non-symmetrical to the wind since as the blade rotates the blade section effectively rotates relative to the wind direction and thus does not remain symmetrical. This phenomenon is particularly apparent where the overall diameter of the VAWT is relatively small such that the relative angle of rotation of the blade section is more pronounced during the time it takes for the blade to cross the wind.

As shown in Figure 4, the aerofoil section defines a section thickness T. The thickness-to-chord ratio of the blades 10 preferably varies along the length of the blade. In one embodiment, the thickness-to-chord ratio is greater at or near the upper end 15 and/or lower end 16 than in the central portion 12. In particular this is advantageous where the blade 10 is tapered such that the camber line L decreases towards the blade ends, as discussed below. Increasing the thickness-to-chord ratio as the camber line decreases increases the range of angles of attack at which the wind can produce usable lift.

The thickness-to-chord ratio may also be enlarged in proximity to the junctions between the blade 10 and the upper struts 3 and lower struts 4. At this point, the relative wind speed reduces since the distance of the blade 10 from the longitudinal axis is less than near the mid-point of the central portion 12. This creates an apparent change in the angle of attack of the wind relative to the blade 10. Increasing the thickness-to-chord ratio of the blade 10 at this point increases the blade's lift coefficient increasing the driving force of the turbine 1. The increased thickness-to-chord ratio at these points also advantageously increases the mechanical strength of the blades 10 at the junction points of the struts 3,4 where the mechanical loads imparted by the airflow are transferred to the rotatable shaft 2.

According to a further aspect of the present invention, the length of the camber line L of the blades 10 may decrease towards the upper tip 15 and/or lower tip 16 compared to the length of the camber line of the central portion 12. Thus, the length of camber line L is tapered towards each tip reducing the camber line of the aerofoil as the blade 10 wraps around the longitudinal axis 7. The tapering of the blade helps to reduce aerodynamic drag and improves the shedding of the air flow from the trailing edge 18. Instead of shedding a single or small number of large, intense vortices, the tapering produces a more gradual, less intense shedding of numerous vortices along the blade. This, in turn, reduces the noise associated with rotation of the turbine 1. This effect is most pronounced on the downwind end of the blade 10, which may be the upper or lower end of the blade 10 depending on the direction of the helix-like structure of the blades. As such, the blades 10 may be tapered only towards the downwind end of the blades.

In a further aspect of the present invention, the blade 10 may be formed in a unitary manner with the upper strut 3 and/or the lower strut 4. The unitary blade and spar unit may be formed with a foam core covered by a composite skin. The skin may be, for example, carbon or glass fibre or a mixture of the materials.

In one example of turbine according to the present invention, three blades 10 are provided, each having a helix-like form as shown in Figure 2. The blades span a vertical height of 3 metres. The table below indicates the relative dimensions of the camber line, thickness and radius of each blade:

|  | Camber line length L | Thickness T | Radius from axis |
|---|---|---|---|
| Upper End | 75mm | 25mm | 950mm |
| Blade Centre | 200mm | 50mm | 1000mm |
| Lower End | 75mm | 25mm | 550mm |

As can be seen from the table, the lower end 16 is radially closer to the longitudinal axis 7 than the upper end 15.

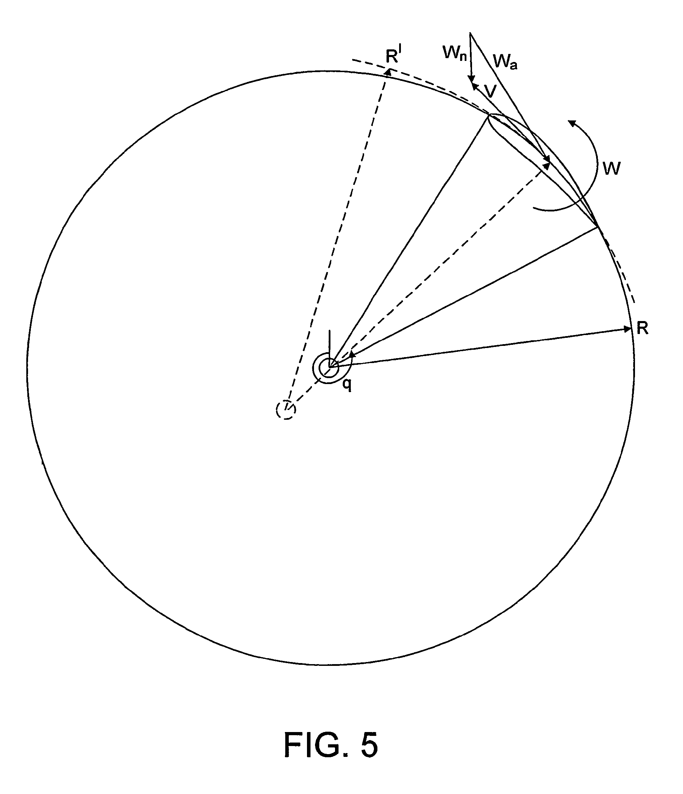

Another embodiment of VAWT according to the present invention is shown in Figure 5. In this embodiment, the blade is again wrapped such that the camber line L has a constant curvature but in this case the radius of curvature R' does not necessarily equal the radius R distance of the blade from the longitudinal axis of rotation 7. It has been found that by varying the radius of curvature R' a VAWT with increased efficiency can be obtained due to the effects of the interaction of the rotation of the VAWT blades and the prevailing wind.

If one considers the effect of the wind forces on the blade it can be seen that the speed at which the air moves over the blade changes as the blade rotates. As the blade moves into the approaching wind, the air speed is effectively increased. As it moves back with the wind the effective speed decreases. This speed can be determined as a function of q, the angle of the turbine relative to the wind direction. The air speed over the turbine, is defined to be Wa

$$W_a = f\{v, W_n, q\} = W_n * sqrt(TSR^2 + 1 - 2.TSR.cos(90-q)$$

Where $W_n$ is the prevailing wind speed, v is the forward velocity of the blade and q is the angle of the blade relative to the wind direction as shown in Figure 5.

Above has been described a turbine blade which was effectively symmetrical in that its profile was wrapped about a radius of curvature R. For that blade, R is a function of the angular velocity of the blade and its forward velocity.

$$R = v / w$$

The forward velocity for the adapted blade of Figure 5 is equal to $W_a$ although the angular velocity remains as w.

The radii now required for a symmetrical blade is therefore:

$$R' = W_a / w$$

$W_a$ changes as the blade rotates into and away from the wind so the radius which is seen to be symmetrical also changes. As it is not easy to alter the shape of the airfoil for different positions around the turbine the blade shape is optimised based on the power profile of the rotating turbine. Power, which is a function of forward velocity and apparent angle of attack peaks as the turbine blades pass perpendicular to the wind direction. At this point the velocity $W_a = W_n * sqrt (TSR + 1)$. The equivalent symmetrical radius at peak power output is therefore:

$$R' = W_a / w$$
$$= W_n * sqrt(TSR^2+1) / (v/R)$$
$$= W_a * R * sqrt(TSR^2 + 1) / (W_n * TSR)$$
$$= R * sqrt(TSR^2 + 1) / TSR$$

where TSR is the tip speed ratio of the blade defined as v/Wn.

For a typical TSR of say 4, the radius R' would therefore be 1.03*R. This indicates that for peak output a radius 3% larger than that about which the turbine is rotating will have closely symmetrical performance, balancing both the upwind and the downwind power peaks.

It will be apparent that as the physical distance R of the blade section from the longitudinal axis 7 varies along the length of the blade so does the optimum radius of curvature R' of the camber line L. Thus, the curvature of the aerofoil camber line, whilst constant at each section of the blade, varies for sections along the length of the blade.

Various modifications to the turbine of the present invention may be made without departing from the scope of the appended claims. In particular, less than three blades 10 or more than three blades 10 may be utilised. The blades 10 may be formed into a shape other than a troposkein. For example, the blades may lie on a right circular cylinder about the longitudinal axis. The blades 10 may be formed separately from the struts 3, 4 and then assembled therewith. The blades 10 may be joined to the shaft 2 by more than two struts. In particular, a third strut may be utilised in-between the upper and lower struts 3, 4. The third strut may be positioned at the mid-point of the length of the blade 10. The blades 10 may not comprise free-standing tips. Instead the upper and lower struts 3. 4 may be joined to the blades 10 at the extremities of the blades 10.

The struts 3, 4 may be replaced by circular discs which span between the rotatable shaft 2 and the blades 10 and are rotatable about the shaft. The discs may be positioned at the upper and lower extremities of the blades 10. Alternatively, the blades 10 may extend beyond the location of the discs. Use of discs can lead to enhanced airflow compared to struts. Preferably the upper and lower surfaces of the discs are planar. Alternatively, annular members may be provided spanning between the blades 10 and having spoke-like struts spanning between the blades and the rotatable shaft.

**Claims**

1.  A vertical-axis wind turbine(1) comprising a shaft (2) rotatable about a longitudinal axis (7) and a plurality of substantially rigid blades (10) mechanically coupled to the shaft, each of the plurality of blades comprising an elongate body (11) having an upper end (15) and a lower end (16), wherein the upper end and the lower end of each blade are rotationally off-set from each other about the longitudinal axis (7) such that each blade has a helix-like form, the section of the elongate body (11) of each blade (10), taken perpendicularly to the longitudinal axis (7), being shaped as an aerofoil having a leading edge (17) and a trailing edge (18) and a camber line (L) defined between the leading edge (17) and the trailing edge (18), **characterised in that** the aerofoil is arcuately shaped such that the camber line (L) lies along a line of constant curvature having a finite radius of curvature, R'.

2.  A vertical-axis wind turbine (1) as claimed in claim 1 wherein the radial distance R of the camber line (L) of each blade (10) from the longitudinal axis (7) varies along the length of the blade (10).

3.  A vertical-axis wind turbine (1) as claimed in claim 2 wherein the radius of curvature R' of the camber line (L) varies along the length of each blade (10).

4.  A vertical-axis wind turbine (1) as claimed in claim 2 or claim 3 wherein 1.00R <= R' <= 1.12R.

5.  A vertical axis wind turbine (1) as claimed in claim 4 wherein R' is approximately equal to 1.03R.

6.  A vertical-axis wind turbine (1) as claimed in claim 4 wherein R' equals R.

7.  A vertical-axis wind turbine (1) as claimed in any of claims 2 to 6 wherein the blade shape approximates a troposkein.

8.  A vertical-axis wind turbine (1) as claimed in any preceding claim wherein the chord length (C) of each blade varies along the length of the blade.

9. A vertical-axis wind turbine (1) as claimed in claim 8 wherein the chord length (C) of each blade (10) is shorter towards the upper (15) and/or lower ends (16) relative to a central portion (12) of each blade.

10. A vertical-axis wind turbine (1) as claimed in any preceding claim further comprising a plurality of struts (3, 4) mechanically coupling the blades (10) to the shaft (2).

11. A vertical-axis wind turbine (1) as claimed in claim 10 wherein each blade (10) is joined to the shaft (2) by means of an upper strut (3) and a lower strut (4).

12. A vertical-axis wind turbine (1) as claimed in claim 11 wherein the elongate body (11) of each blade (10) comprises a central portion (12) extending between the blade's upper (3) and lower struts (4), an upper portion (13) extending above the blade's upper (3) strut and a lower portion (14) extending below the blade's lower strut (4).

13. A vertical-axis wind turbine (1) as claimed in claim 12 wherein the upper portion (13) of each blade (10) defines the upper end (13), wherein the upper end (15) is free-standing.

14. A vertical-axis wind turbine (1) as claimed in claim 12 or claim 13 wherein the lower portion (14) of each blade defines the lower end (16), wherein the lower end (16) is free-standing.

15. A vertical-axis wind turbine (1) as claimed in claim 13 or claim 14 wherein the radial distance of the upper end (15) and the lower end (16) of each blade (10) from the longitudinal axis (7) is less than the length of the struts (3, 4).

16. A vertical-axis wind turbine (1) as claimed in claim 11 wherein the upper strut (3) is joined to the upper end (15) of each blade and the lower strut (4) is joined to the lower end (16) of each blade.

17. A vertical-axis wind turbine (1) as claimed in any of claims 10 to 16 wherein the thickness-to-chord ratio of each blade is greater at or near a junction with the struts (3, 4) compared to the thickness-to-chord ratio of the central portion (12).

18. A vertical-axis wind turbine (1) as claimed in any preceding claim wherein the thickness-to-chord ratio of each blade (10) increases towards the upper (15) and/or lower ends (16) of the elongate body (14) compared to the thickness-to-chord ratio of the central portion (12).

19. A vertical-axis wind turbine (1) as claimed in any of claims 1 to 17 wherein the thickness-to-chord ratio of each blade (10) is constant along the elongate body (11).

20. A vertical-axis wind turbine (1) as claimed in any preceding claim wherein the turbine comprises three blades (10) equi-spaced about the longitudinal axis (7).

21. A vertical-axis wind turbine (1) as claimed in any preceding claim further comprising at least one strut (3, 4) between each blade (10) and the rotatable shaft (2), wherein the strut is formed as a unitary member with the blade.

22. A vertical-axis wind turbine (1) as claimed in any of claims 1 to 9 further comprising at least one disc-like member spanning between each blade (10) and the rotatable shaft.

23. A vertical-axis wind turbine (1) as claimed in claim 22 wherein the at least on disc-like member is located at an extremity of the blades (10).

24. A vertical-axis wind turbine (1) as claimed in any preceding claim wherein each blade (10) comprises a foam core and a composite skin.

25. A vertical-axis wind turbine (1) comprising a shaft (2) rotatable about a longitudinal axis (7) and a plurality of substantially rigid blades (10) mechanically coupled to the shaft, each of the plurality of blades comprising an elongate body (11) having an upper end (15) and a lower end (16), wherein the upper end and the lower end of each blade are rotationally off-set from each other about the longitudinal axis (7) such that each blade has a helix-like form, the section of the elongate body of each blade, taken perpendicularly to the longitudinal axis, being shaped as an aerofoil having a leading edge (17) and a trailing edge (18) and a camber line (L) defined between the leading edge and the trailing edge, **characterised in that** the length of the camber line (L) of each blade decreases towards the upper (15) and/or lower ends (16) relative to a central portion of each blade.

26. A vertical-axis wind turbine (1) as claimed in claim 25 wherein the length of the camber line (L) of each blade decreases towards at least a downwind end of each blade (10).


**Patentansprüche**

1. Vertikalachsen-Windturbine (1), die eine Welle (2), die um eine Längsachse (7) herum drehbar ist, sowie eine Mehrzahl von im Wesentlichen starren Blättern (10), die mit der Welle mechanisch gekoppelt sind, aufweist, wobei jedes der Mehrzahl von Blättern einen länglichen Körper (11) aufweist, der ein oberes Ende (15) und ein unteres Ende (16) aufweist, worin das obere Ende und das untere Ende jedes Blatts um die Längsachse (7) herum voneinander drehversetzt sind, so dass jedes Blatt eine schraubenartige Form hat, wobei der Querschnitt des länglichen Körpers (11) jedes Blatts (10), senkrecht zur Längsachse (7) gelegt, wie ein Luftflügel geformt ist, der eine Vorderkante (17) und eine Hinterkante (18) und eine Wölbungslinie (L) aufweist, die zwischen der Vorderkante (17) und der Hinterkante (18) definiert ist, **dadurch gekennzeichnet, dass** der Luftflügel bogenförmig gestaltet ist, so dass die Wölbungslinie (L) entlang einer Linie mit konstanter Krümmung liegt, die einen endlichen Krümmungsradius R' aufweist.

2. Vertikalachsen-Windturbine (1) nach Anspruch 1, worin der radiale Abstand R der Wölbungslinie (L) jedes Blatts (10) von der Längsachse (7) entlang der Länge des Blatts (10) variiert.

3. Vertikalachsen-Windturbine nach Anspruch 2, worin der Krümmungsradius R' der Wölbungslinie (L) entlang der Länge jedes Blatts (10) varieert.

4. Vertikalachsen-Windturbine (1) nach Anspruch 2 oder 3, worin 1,00R <=R' <= 1,12R.

5. Vertikalachsen-Windturbine (1) nach Anspruch 4, worin R' angenähert gleich 1,03R ist.

6. Vertikalachsen-Windturbine (1) nach Anspruch 4, worin R' gleich R ist.

7. Vertikalachsen-Windturbine (1) nach einem der Ansprüche 2 bis 6, worin die Blattform einem Troposkein angenähert ist.

8. Vertikalachsen-Windturbine (1) nach einem vorhergehenden Anspruch, worin die Sehnenlänge (C) jedes Blatts entlang der Länge des Blatts variiert.

9. Vertikalachsen-Windturbine (1) nach Anspruch 8, worin die Sehnenlänge (C) jedes Blatts (10), relativ zu einem Mittelabschnitt (12) jedes Blatts, zu dem oberen (15) und/oder unteren Ende (16) hin kürzer wird.

10. Vertikalachsen-Windturbine (1) nach einem vorhergehenden Anspruch, die ferner eine Mehrzahl von Streben (3, 4) aufweist, die die Blätter (10) mit der Welle (2) mechanisch koppeln.

11. Vertikalachsen-Windturbine (1) nach Anspruch 10, worin jedes Blatt (10) mit der Welle (2) mittels einer oberen Strebe (3) und einer unteren Strebe (4) verbunden ist.

12. Vertikalachsen-Windturbine (1) nach Anspruch 11, worin der längliche Körper (11) jedes Blatts (10) einen mittleren Abschnitt (12), der sich zwischen der oberen (3) und der unteren (4) Strebe des Blatts erstreckt, einen oberen Abschnitt (13), der sich über der oberen Strebe (3) erstreckt, und einen unteren Abschnitt (14), der sich unter der unteren Strebe (4) des Blatts streckt, aufweist.

13. Vertikalachsen-Windturbine (1) nach Anspruch 12, worin der obere Abschnitt (13) jedes Blatts (10) das obere Ende (13) definiert, worin das obere Ende (15) freistehend ist.

14. Vertikalachsen-Windturbine (1) nach Anspruch 12 oder Anspruch 13, worin der untere Abschnitt (14) jedes Blatts das untere Ende (16) definiert, worin das untere Ende (16) freistehend ist.

**15.** Vertikalachsen-Windturbine (1) nach Anspruch 13 oder Anspruch 14, worin der radiale Abstand des oberen Endes (15) und des unteren Endes (16) jedes Blatts (10) von der Längsachse (7) kleiner als die Länge der Streben (3, 4) ist.

**16.** Vertikalachsen-Windturbine (1) nach Anspruch 11, worin die obere Strebe (3) mit dem oberen Ende (15) jedes Blatts verbunden ist und die untere Strebe (4) mit dem unteren Ende (16) jedes Blatts verbunden ist.

**17.** Vertikalachsen-Windturbine (1) nach einem der Ansprüche 10 bis 16, worin an oder in der Nähe einer Verbindung mit den Streben (3, 4) das Dicke-zu-Sehne-Verhältnis jedes Blatts im Vergleich zum Dicke-zu-Sehne-Verhältnis des mittleren Abschnitts (12) größer ist.

**18.** Vertikalachsen-Windturbine (1) nach einem vorhergehenden Anspruch, worin das Dicke-zu-Sehne-Verhältnis jedes Blatts (10) zum oberen (15) und/oder unteren Ende (16) des länglichen Körpers (14) zunimmt, im Vergleich zum Dicke-zu-Sehne-Verhältnis des mittleren Abschnitts (12).

**19.** Vertikalachsen-Windturbine (1) nach einem der Ansprüche 1 bis 17, worin das Dicke-zu-Sehne-Verhältnis jedes Blatts (10) entlang dem länglichen Körper (11) konstant ist.

**20.** Vertikalachsen-Windturbine (1) nach einem vorhergehenden Anspruch, worin die Turbine drei Blätter (10) mit gleichem Abstand um die Längsachse (7) herum aufweist.

**21.** Vertikalachsen-Windturbine (1) nach einem vorhergehenden Anspruch, die ferner zumindest eine Strebe (3, 4) zwischen jedem Blatt (10) und der drehbaren Welle (2) aufweist, worin die Strebe als mit dem Blatt einheitliches Element ausgebildet ist.

**22.** Vertikalachsen-Windturbine (1) nach einem der Ansprüche 1 bis 9, die ferner zumindest ein scheibenartiges Element aufweist, das sich zwischen jedem Blatt (10) und der drehbaren Welle spannt.

**23.** Vertikalachsen-Windturbine (1) nach Anspruch 22, worin das zumindest eine scheibenartige Element am Ende der Blätter (10) angeordnet ist.

**24.** Vertikalachsen-Windturbine (1) nach einem vorhergehenden Anspruch, worin jedes Blatt (10) einen Schaumkern und eine Komposithaut aufweist.

**25.** Vertikalachsen-Windturbine (1) die eine Welle (2), die um eine Längsachse (7) herum drehbar ist, sowie eine Mehrzahl von im Wesentlichen starren Blättern (10), die mit der Welle mechanisch gekoppelt sind, aufweist, wobei jedes der Mehrzahl von Blättern einen länglichen Körper (11) aufweist, der ein oberes Ende (15) und ein unteres Ende (16) aufweist, worin das obere Ende und das untere Ende jedes Blatts um die Längsachse (7) herum voneinander drehversetzt sind, so dass jedes Blatt eine schraubenartige Form hat, wobei der Querschnitt des länglichen Körpers (11) jedes Blatts (10), senkrecht zur Längsachse (7) gelegt, wie ein Luftflügel geformt ist, der eine Vorderkante (17) und eine Hinterkante (18) und eine Wölbungslinie (L) aufweist, die zwischen der Vorderkante und der Hinterkante definiert ist, **dadurch gekennzeichnet, dass** die Länge der Wölbungslinie (L) jedes Blatts, relativ zu einem Mittelabschnitt jedes Blatts, zu dem oberen (15) und/oder unteren Ende (16) hin abnimmt.

**26.** Vertikalachsen-Windturbine (1) nach Anspruch 25, worin die Länge der Wölbungslinie (L) jedes Blatts zu zumindest einem Abwindende jedes Blatts (10) hin abnimmt.

**Revendications**

**1.** Turbine éolienne à axe vertical (1) comprenant un arbre (2) pouvant tourner autour d'un axe longitudinal (7) et une pluralité de pales essentiellement rigides (10) couplées mécaniquement à l'arbre, chacune de la pluralité de pales comprenant un corps allongé (11) ayant une extrémité supérieure (15) et une extrémité inférieure (16), où l'extrémité supérieure et l'extrémité inférieure de chaque pale sont décalées en rotation l'une par rapport à l'autre autour de l'axe longitudinal (7) de sorte que chaque pale ait une forme hélicoïdale, la section du corps allongé (11) de chaque pale (10), prise perpendiculairement à l'axe longitudinal (7), ayant la forme d'une aile qui comprend un bord d'attaque (17) et un bord de fuite (18) et une ligne de cambrure (L) définie entre le bord d'attaque (17) et le bord de fuite (18), **caractérisée en ce que** l'aile est de forme arquée de sorte que la ligne de cambrure (L) s'étend sur une ligne de courbure constante ayant un rayon de courbure fini, R'.

**2.** Turbine éolienne à axe vertical (1) telle que revendiquée dans la revendication 1, dans laquelle la distance radiale R de la ligne de cambrure (L) de chaque pale (10) à partir de l'axe longitudinal (7) varie sur toute la longueur de la pale (10).

**3.** Turbine éolienne à axe vertical (1) telle que revendiquée dans la revendication 2, dans laquelle le rayon de courbure R' de la ligne de cambrure (L) varie sur toute la longueur de chaque pale (10).

**4.** Turbine éolienne à axe vertical (1) telle que revendiquée dans la revendication 2 ou 3, dans laquelle 1,00R <= R' <= 1,12R.

**5.** Turbine éolienne à axe vertical (1) telle que revendiquée dans la revendication 4, dans laquelle R' est approximativement égal à 1,03R.

**6.** Turbine éolienne à axe vertical (1) telle que revendiquée dans la revendication 4, dans laquelle R' est égal à R.

**7.** Turbine éolienne à axe vertical (1) telle que revendiquée dans l'une des revendications 2 à 6, dans laquelle la forme de la pale se rapproche de la forme troposkienne.

**8.** Turbine éolienne à axe vertical (1) telle que revendiquée dans l'une des revendications précédentes, dans laquelle la longueur de corde (C) de chaque pale varie sur toute la longueur de la pale.

**9.** Turbine éolienne à axe vertical (1) telle que revendiquée dans la revendication 8, dans laquelle la longueur de corde (C) de chaque pale (10) est plus courte vers les extrémités supérieure (15) et/ou inférieure (16) par rapport à une partie centrale (12) de chaque pale.

**10.** Turbine éolienne à axe vertical (1) telle que revendiquée dans l'une des revendications précédentes, comprenant en outre une pluralité d'entretoises (3, 4) couplant mécaniquement les pales (10) à l'arbre (2).

**11.** Turbine éolienne à axe vertical (1) telle que revendiquée dans la revendication 10, dans laquelle chaque pale (10) est reliée à l'arbre (2) par l'intermédiaire d'une entretoise supérieure (3) et d'une entretoise inférieure (4).

**12.** Turbine éolienne à axe vertical (1) telle que revendiquée dans la revendication 11, dans laquelle le corps allongé (11) de chaque pale (10) comprend une partie centrale (12) s'étendant entre les entretoises supérieure (3) et inférieure (4) de la pale, une partie supérieure (13) s'étendant au-dessus de l'entretoise supérieure (3) de la pale et une partie inférieure (14) s'étendant en-dessous de l'entretoise inférieure (4) de la pale.

**13.** Turbine éolienne à axe vertical (1) telle que revendiquée dans la revendication 12, dans laquelle la partie supérieure (13) de chaque pale (10) définit l'extrémité supérieure (13), où l'extrémité supérieure (15) est autostable.

**14.** Turbine éolienne à axe vertical (1) telle que revendiquée dans la revendication 12 ou 13, dans laquelle la partie inférieure (14) de chaque pale définit l'extrémité inférieure (16), où l'extrémité inférieure (16) est autostable.

**15.** Turbine éolienne à axe vertical (1) telle que revendiquée dans la revendication 13 ou 14, dans laquelle la distance radiale de l'extrémité supérieure (15) et de l'extrémité inférieure (16) de chaque pale (10) à partir de l'axe longitudinal (7) est inférieur à la longueur des entretoises (3, 4).

**16.** Turbine éolienne à axe vertical (1) telle que revendiquée dans la revendication 11, dans laquelle l'entretoise supérieure (3) est reliée à l'extrémité supérieure (15) de chaque pale et l'entretoise inférieure (4) est reliée à l'extrémité inférieure (16) de chaque pale.

**17.** Turbine éolienne à axe vertical (1) telle que revendiquée dans l'une des revendications 10 à 16, dans laquelle le rapport épaisseur sur corde de chaque pale est supérieur, au niveau ou à proximité d'une jonction avec les entretoises (3, 4), au rapport épaisseur sur corde de la partie centrale (12).

**18.** Turbine éolienne à axe vertical (1) telle que revendiquée dans l'une des revendications précédentes, dans laquelle le rapport épaisseur sur corde de chaque pale (10) augmente vers les extrémités supérieure (15) et/ou inférieure (16) du corps allongé (14) comparé au rapport épaisseur sur corde de la partie centrale (12).

**19.** Turbine éolienne à axe vertical (1) telle que revendiquée dans l'une des revendications 1 à 17, dans laquelle le rapport épaisseur sur corde de chaque pale (10) est constant le long du corps allongé (11).

**20.** Turbine éolienne à axe vertical (1) telle que revendiquée dans l'une des revendications précédentes, dans laquelle la turbine comprend trois pales (10) espacées de manière équidistante autour de l'axe longitudinal (7).

**21.** Turbine éolienne à axe vertical (1) telle que revendiquée dans l'une des revendications précédentes, comprenant en outre au moins une entretoise (3, 4) entre chaque pale (10) et l'arbre rotatif (2), où l'entretoise est formée en tant qu'élément unitaire avec la pale.

**22.** Turbine éolienne à axe vertical (1) telle que revendiquée dans l'une des revendications 1 à 9, comprenant en outre au moins un élément en forme de disque s'étendant entre chaque pale (10) et l'arbre rotatif.

**23.** Turbine éolienne à axe vertical (1) telle que revendiquée dans la revendication 22, dans laquelle l'au moins un élément en forme de disque est situé au niveau d'une extrémité des pales (10).

**24.** Turbine éolienne à axe vertical (1) telle que revendiquée dans l'une des revendications précédentes, dans laquelle chaque pale (10) comprend un coeur en mousse et un revêtement composite.

**25.** Turbine éolienne à axe vertical (1) comprenant un arbre (2) pouvant tourner autour d'un axe longitudinal (7) et une pluralité de pales essentiellement rigides (10) couplées mécaniquement à l'arbre, chacune de la pluralité de pales comprenant un corps allongé (11) ayant une extrémité supérieure (15) et une extrémité inférieure (16), où l'extrémité supérieure et l'extrémité inférieure de chaque pale sont décalées en rotation l'une par rapport à l'autre autour de l'axe longitudinal (7) de sorte que chaque pale ait une forme hélicoïdale, la section du corps allongé de chaque pale, prise perpendiculairement à l'axe longitudinal, ayant la forme d'une aile qui comprend un bord d'attaque (17) et un bord de fuite (18) et une ligne de cambrure (L) définie entre le bord d'attaque et le bord de fuite, **caractérisée en ce que** la longueur de la ligne de cambrure (L) de chaque pale diminue vers les extrémités supérieure (15) et/ou inférieure (16) par rapport à une partie centrale de chaque pale.

**26.** Turbine éolienne à axe vertical (1) telle que revendiquée dans la revendication 25, dans laquelle la longueur de la ligne de cambrure (L) de chaque pale diminue vers au moins une extrémité en aval de chaque pale (10).

# FIG. 1

FIG. 1a

FIG. 1b

FIG. 2

FIG. 3a

FIG. 3b

FIG. 4

FIG. 5

**EP 1 649 163 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1835018 A
- US 5405246 A

- US 20010001299 A